# EUROPÄISCHE PATENTSCHRIFT

(11) **EP 2 647 892 B1**
(45) Veröffentlichungstag und Bekanntmachung des Hinweises auf die Patenterteilung: **31.12.2014**
(21) Anmeldenummer: 12002428.6
(22) Anmeldetag: 03.04.2012
(51) Int. Cl.: F16K 3/12, F16K 31/50

(54) **Schieber umfassend ein Schiebergehäuse**
Slide comprising a slide housing
Coulisseau comprenant un boîtier pour le coulisseau

(43) Veröffentlichungstag der Anmeldung: 09.10.2013
(73) Patentinhaber: Phönix Armaturen-Werke Bregel GmbH, 34471 Volkmarsen (DE)
(72) Erfinder: Schubert, Matthias, 34369 Hofgeismar (DE); Wodara, Gunter, 34454 Bad Arolsen (DE); Kellermann, Hannes, 34117 Kassel (DE)
(74) Vertreter: Walther, Walther & Hinz GbR

(56) Entgegenhaltungen:
- DE-A1- 2 635 688
- DE-A1- 3 342 998
- DE-A1- 10 014 796
- DE-B- 1 226 847

## Beschreibung

Die Erfindung betrifft einen Schieber umfassend ein Schiebergehäuse, wobei das Schiebergehäuse einen Spindeltrieb aufweist, wobei der Spindeltrieb an seinem einen Ende einen Schieberkeil zum Absperren einer Rohrleitung besitzt. "Axial verschieblich" bedeutet im Sinne des Anspruchs 1 eine Verschiebung in Richtung der Längsachse der Spindel bzw. der Achse.

Ein Schieber der eingangs genannten Art ist aus dem Stand der Technik bekannt. Derartige Schieber werden in Rohrleitungen unterschiedlicher Nennweite eingebaut, wobei durch einen Schieber eine Rohrleitung abgesperrt werden kann. Ein solcher Schieber umfasst ein Schiebergehäuse, das in eine Rohrleitung eingebaut wird, d. h. zu beiden Seiten an das

Schiebergehäuse angeflanscht ist die Rohrleitung. In dem Schiebergehäuse ist ein Schieberkeil vorgesehen, der über einen Spindeltrieb in eine entsprechende Keilaufnahme in dem Schiebergehäuse einfahrbar ist, um die Rohrleitung abzusperren. Hierzu ist der Schieberkeil der, wie das Wort dies schon ausdrückt, in Einschubeinrichtung in die Keilaufnahme keilförmig ausgebildet. Zur Erzielung einer vollständigen Absperrung ist vorgesehen, dass sowohl der Schieberkeil als auch die Keilaufnahme für den Schieberkeil auf ihren einander zugewandten Flächen Dichtungselemente aufweisen.

Der Spindeltrieb ist überwiegend motorisch angetrieben. Solche Spindeltriebe müssen sehr leistungsfähig sein, was sich insbesondere darin ausdrückt, dass die Spindel des Spindeltriebes meistens aus einem hochfesten Werkzeugstahl ausgebildet ist. Nun ist allerdings auch bekannt, dass in den abzusperrenden Rohrleitungen hoch korrosive Medien transportiert werden. Nun sind Werkzeugstähle zwar hoch fest, aber nicht korrosionsbeständig.

In diesem Zusammenhang ist aus der DE 10014796 A1 bei einem Hebeventil bekannt, die Spindel durch eine Kupplung axial verschieblich mit einer Achse zu verbinden. Eine solche zweiteilige Spindelausbildung ist im übrigen auch aus der DE 2635688 A1, der DE 1226847 B1 und der DE 3342998 bekannt. Der Teil des Spindeltriebes, der die eigentliche Spindel aufweist, ist aus einem hochfesten Werkzeug- oder Schraubenstahl ausgebildet, wobei die Achse, die durch die Spindel verschieblich ist, aus einem korrosionsbeständigen Material z. B. Edelstahl hergestellt ist. Das heißt, dass durch die Kupplung zwei unterschiedliche Bauteile miteinander gekuppelt werden. Die Spindel in Verbindung mit dem Antrieb sorgt für die Verschiebung der Achse, die Achse überträgt die Axialbewegung der Spindel auf den Schieberkeil im Bereich des Medien führenden Teils des Schiebergehäuses.

Die der Erteilung zugrunde liegende Aufgabe besteht darin zu verhindern, dass durch den Spindeltrieb der Schieberkeil nicht mit unzulässig hoher Kraft in die Keilaufnahme im Schiebergehäuse eingedrückt wird, was schlussendlich dort zu einer Beschädigung oder Zerstörung der Dichtungen führen würde.

Zur Lösung der Aufgabe wird erfindungsgemäß vorgeschlagen, dass die Säule zumindest einen unteren Anschlag, vorzugsweise auch einen oberen Anschlag für den Kupplungssteg aufweist.

Vorteilhafte Merkmale und Ausgestaltungen zu der Erfindung ergeben sich aus den Unteransprüchen.

Desweiteren ist vorgesehen, dass die Kupplung einen Kupplungssteg mit einer Manschette aufweist, wobei der Kupplungssteg durch mindestens eine sich parallel zum Spindeltrieb erstreckende Säule verschieblich geführt ist. Der Kupplungssteg ist somit nicht nur Teil der Verbindung der beiden Teile des Spindeltriebes, nämlich der eigentlichen Spindel, die motorisch antreibbar ist, und der Achse, an deren Ende der Schieberkeil befestigt ist, sondern der Kupplungssteg sorgt auch für eine Führung des Spindeltriebes.

Für die Verbindung der Enden der Spindel und der Achse durch den Kupplungssteg gilt Folgendes:

Die Manschette des Kupplungssteges erfasst jeweils das Ende der Achse und der Spindel und verbindet diese derart, dass Axialkräfte übertragbar sind. Die Verbindung der Enden der Spindel und der Achse durch die Manschette des Kupplungssteges kann hierbei kraft- oder formschlüssig erfolgen. Bei einer formschlüssigen Verbindung weisen die Enden der Spindel und der Achse jeweils eine insbesondere umlaufende Nut auf, wobei die Manschette entsprechende Vorsprünge auf der Innenseite der Manschette zeigt, die in die zuvor beschriebenen Nuten eingreifen. Insofern wird über die Manschette in dem Kupplungssteg die Möglichkeit eröffnet, Axialkräfte zu übertragen, wie sie z. B. auftreten, wenn der Schieberkeil aus der Keilaufnahme herausgezogen wird. Hierbei ist darauf hinzuweisen, dass sich weder die Spindel noch die Achse dreht. Vielmehr führen beide Teile nur eine Längsbewegung aus.

Der Kupplungssteg umfasst nach einem weiteren Merkmal der Erfindung zwei Stegschalen, die im Bereich der Säule eine Lagerbuchse bilden, wobei die Lagerbuchse ein Gleit- oder Kugellager aufweist. Hierdurch wird erreicht, dass eine im Prinzip ruckfreie, und extrem genaue Führung des Spindeltriebes durch die parallel zum Spindeltrieb an dem Gehäuse des Schiebers angeordnete Säule ermöglicht wird.

Es wurde bereits darauf hingewiesen, dass der Spindeltrieb eine motorisch angetriebene Spindel umfasst. Der motorische Antrieb umfasst einen Motor und einen Gewindetrieb, der die Spindel aufnimmt.

Eine solche motorisch angetriebene Spindel verfügt über eine Steuerung, die schlussendlich dafür sorgt, dass in Abhängigkeit von einem vorgegebenen Spindelweg der Motor stillgesetzt wird. Ist die Steuerung defekt, dann wird durch den Motor der Schieberkeil in die Aufnahme für den Schieberkeil in der Rohrleitung gedrückt. Hierbei kann es vorkommen, dass der Spindeltrieb ausbaucht mit der Folge der Beschädigung des Spindeltriebes. Dadurch, dass die Spindel während der Verfahrbewegung der Spindel durch die parallel zum Spindeltrieb verlaufende Säule geführt ist, kann nun ein Ausbauchen selbst bei einem "Überdrehen" des Antriebes vermieden werden.

Der Gewindetrieb kann als Planeten- oder Rollengewindetrieb ausgebildet sein. Er wandelt die rotatorische Bewegung des Antriebsmotors in eine Axialbewegung der Spindel um. Beide Arten von Gewindetrieben zeichnen sich durch eine hohe Tragfähigkeit, lange Lebensdauer und eine große Zuverlässigkeit aus. Darüber hinaus zeigen derartige Gewindetriebe bei kleinen Verfahrwegen sehr hohe Wiederholgenauigkeiten.

Anhand der Zeichnungen wird die Erfindung nachstehend beispielhaft näher erläutert.

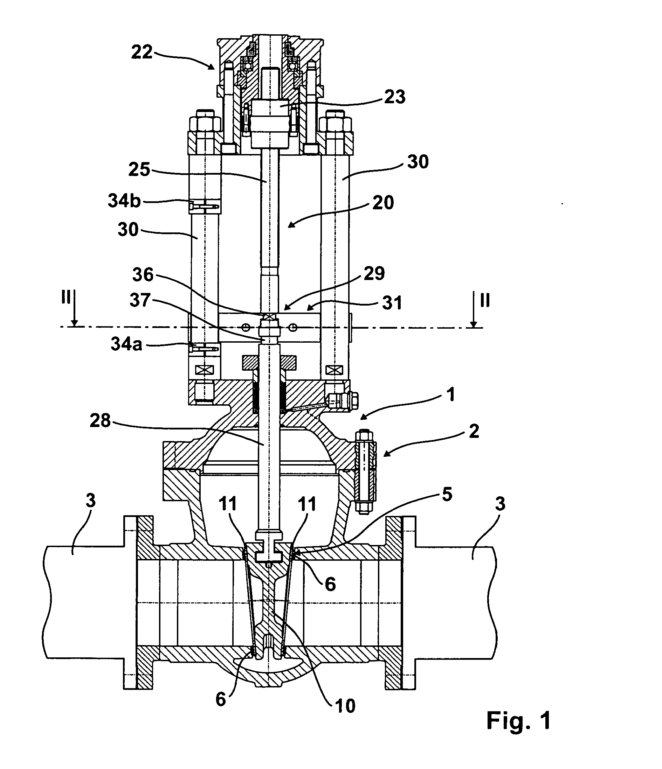

- Fig. 1: zeigt den Schieber in einer Seitenansicht im Schnitt;
- Fig. 2: zeigt einen Schnitt gemäß der Linie II-II aus Fig. 1.

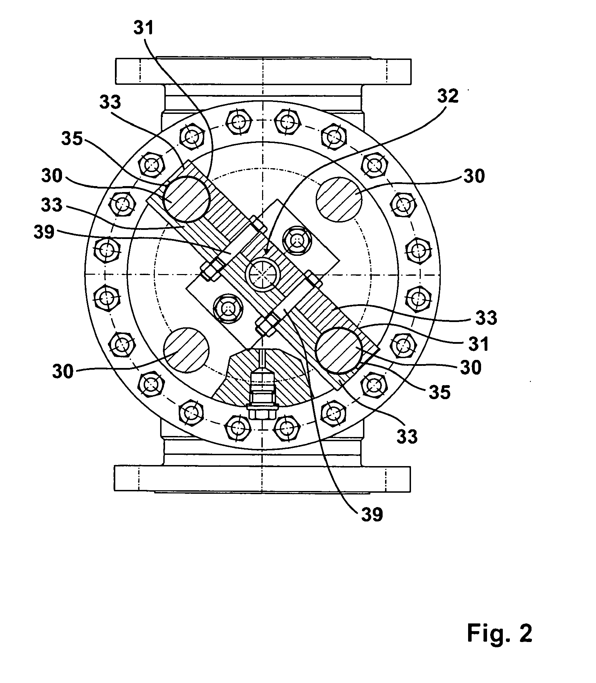

Der insgesamt mit 1 bezeichnete Schieber besitzt das Schiebergehäuse 2, das in einer Rohrleitung 3 einsitzt, d. h. zu beiden Seiten des Schiebergehäuses ist die Rohrleitung 3 angeflanscht. Das Schiebergehäuse 2 weist eine Keilaufnahme 5 zur Aufnahme des Schieberkeiles 10 auf. Der Schieberkeil 10 sitzt in der Keilaufnahme abgedichtet ein, wobei zur Abdichtung am Schieberkeil angeordnete Dichtungen 11 sowie an der Keilaufnahme angeordnete Dichtungen 6 vorgesehen sind. An dem Schieberkeil 10, der in der Ansicht entsprechend dem Querschnitt der Rohrleitung in etwa kreisförmig ausgebildet ist, angeordnet ist der insgesamt mit 20 bezeichnete Spindeltrieb. Der Spindeltrieb 20 ist in einem Spindelkopf 22 gelagert, wobei zur Lagerung der Spindel in dem Spindelkopf 22 ein Gewindetrieb 23 vorgesehen ist, der in Verbindung mit einem Motor (nicht dargestellt) dem Antrieb der Spindel 25 des Spindeltriebes dient. Der Spindelkopf 22 ist durch vier Säulen 30 mit dem Schiebergehäuse 2 verbunden (Fig. 2). Der Gewindetrieb ist beispielsweise als Rollengewindetrieb oder als Planetenrollengewindetrieb ausgebildet. An die Spindel 25 schließt sich die Achse 28 an, die über die insgesamt mit 29 bezeichnete Kupplung mit der Spindel 25 des Spindeltriebes 20 in Verbindung steht. Die Spindel besteht aus einem hochfesten Werkzeug- oder Schraubenstahl, wohingegen die Achse aus einem korrosionsbeständigen Material, z. B. einem Edelstahl ausgebildet ist.

Wie bereits ausgeführt, steht der Spindelkopf 22 mit dem Schiebergehäuse 2 durch mindestens zwei, vorzugsweise vier parallel zueinander verlaufende Säulen 30 in Verbindung, wobei ein Kupplungssteg 31 vorgesehen ist, der den Spindeltrieb 20 mit zwei Säulen 30 verschieblich verbindet. Um ein Gleiten des Kupplungssteges 31 auf der Säule 30 zu gewährleisten, ist in dem Kupplungssteg im Bereich der Säule 30 eine Lagerbuchse 35 in Form eines Gleitlagers oder ein entsprechendes Kugel- oder Rollenlager (Fig. 2) vorgesehen.

Es wurde bereits darauf hingewiesen, dass der Antriebsmotor eine Steuerung aufweist, die dafür sorgt, dass dann wenn der Schieberkeil 10 in der Keilaufnahme 5 seine Endstellung erreicht hat, der Motor (nicht dargestellt) stillgesetzt wird. Für den Fall, dass die Steuerung versagt, ist ein unterer Anschlag 34a und ein oberer Anschlag 34b im Bereich der Enden zumindest einer Säule 30 vorgesehen, gegen den der Kupplungssteg 31 anschlägt, wenn der Motor die Spindel versucht zu überdrehen. Hierdurch wird zum einen verhindert, dass der Schieberkeil 10 mit übermäßiger Kraft in die Keilaufnahme 5 eingepresst wird, mit der Folge, dass zumindest die Dichtungen 6, 11 beschädigt werden oder gar der ganze Schieberkeil bzw. die Keilaufnahme in dem Schiebergehäuse.

Zum anderen verhindert der Kupplungssteg bei einem Überdrehen des Motors, dass der Spindeltrieb 20 ausbaucht. Das heißt, der Kupplungssteg stabilisiert den Spindeltrieb insbesondere für den Fall, dass die Steuerung zum Stillsitzen des Spindeltriebes nach Durchlaufen eines bestimmten Weges den Antrieb nicht stillsetzt.

Darüber hinaus bildet der Kupplungssteg 31 mit einer im Bereich der Enden der Achse und der Spindel angeordneten Manschette 32 die Kupplung insofern, als durch die Manschette des Kupplungssteges die beiden Enden von Spindel und Achse in axialer Richtung kraftübertragend zusammengehalten sind (Fig. 2). Hierzu sind die beiden Stegschalen 33 des Kupplungssteges 31 zu beiden Seiten der Manschette 32 durch eine Schraubenverbindung 39 verbunden.

Zur in axialer Richtung kraftübertragender Verbindung zwischen Spindel und Welle ist folgendes auszuführen. Die Enden der Spindel und der Welle stehen fluchtend zueinander aufeinander. Im Bereich der Manschette 32 des Kupplungssteges weisen sowohl die Achse als auch die Spindel eine Nut, insbesondere eine umlaufende Nut 36, 37 auf. In diese Nuten greift die Manschette mit entsprechenden Vorsprüngen (nicht dargestellt) ein, sodass eine formschlüssige Verbindung zwischen Spindel und Achse durch die Manschette des Kupplungssteges herbeigeführt ist.

### Bezugszeichenliste:

- 1: Schieber
- 2: Schiebergehäuse
- 3: Rohrleitung
- 5: Keilaufnahme
- 6: Dichtung
- 10: Schieberkeil
- 11: Dichtung
- 20: Spindeltrieb
- 22: Spindelkopf
- 23: Gewindetrieb
- 25: Spindel
- 28: Achse
- 29: Kupplung
- 30: Säule
- 31: Kupplungssteg
- 32: Manschette
- 33: Stegschale
- 34a: unterer Anschlag
- 34b: oberer Anschlag
- 35: Lagerbuchse
- 36: umlaufende Nut in der Spindel
- 37: umlaufende Nut in der Achse
- 39: Schraubverbindung für die Stegschalen

## Patentansprüche

1. Schieber (1) umfassend ein Schiebergehäuse (2), wobei das Schiebergehäuse (2) einen Spindeltrieb (20) aufweist, wobei der Spindeltrieb (20) an seinem einen Ende einen Schieberkeil (10) zum Absperren einer Rohrleitung (3) aufweist, wobei der Spindeltrieb (20) eine motorisch angetriebene Spindel (25) umfasst,
wobei die Spindel (25) durch eine Kupplung (29) axial verschieblich mit einer Achse (28) verbunden ist, wobei die Achse (28) endseitig den Schieberkeil (10) aufweist,
wobei der Spindeltrieb (20) im Bereich der Kupplung (29) einen Kupplungssteg (31) aufweist, wobei der Kupplungssteg (31) durch mindestens eine parallel zum Spindeltrieb (20) sich erstreckende Säule (30) verschieblich geführt ist,
und wobei die Säule (30) zumindest einen unteren Anschlag (34a) für den Kupplungssteg (31) aufweist.

2. Schieber (1) nach Anspruch 1,
**dadurch gekennzeichnet,**
**dass** der Kupplungssteg (31) zwei Stegschalen (33) umfasst, die im Bereich der Säule (30) eine Lagerbuchse (35) bilden.

3. Schieber (1) nach Anspruch 2,
**dadurch gekennzeichnet,**
**dass** die Lagerbuchse (35) ein Gleit- oder ein Kugellager aufweist.

4. Schieber (1) nach einem der voranstehenden Ansprüche,
**dadurch gekennzeichnet,**
**dass** die Achse (28) zur Aufnahme des Schieberkeils (10) aus einem korrosionsbeständigen Material ausgebildet ist.

5. Schieber (1) nach einem der voranstehenden Ansprüche,
**dadurch gekennzeichnet,**
**dass** die Kupplung (29) eine im Kupplungssteg (31) angeordnete Manschette (32) umfasst, die form- oder kraftschlüssig sowohl mit der Spindel (25) als auch mit der Achse (28) in Verbindung steht.

6. Schieber (1) nach Anspruch 5,
**dadurch gekennzeichnet,**
**dass** sowohl die Achse (28) als auch die Spindel (25) eine Nut (36, 37) aufweisen, in die Vorsprünge in der Manschette (32) eingreifen.

7. Schieber (1) nach einem der voranstehenden Ansprüche,
**dadurch gekennzeichnet,**
**dass** die Spindel (25) als Rollengewindetrieb ausgebildet ist.

8. Schieber (1) nach einem der voranstehenden Ansprüche,
**dadurch gekennzeichnet,**
**dass** die Spindel als Planetenrollengewindetrieb ausgebildet ist.

## Claims

1. A gate valve (1) comprising a valve body (2), wherein the valve body (2) has a spindle drive (20), wherein the spindle drive (20) has a wedge (10) for blocking a pipe (3) at its one end, wherein the spindle drive (20) comprises a motor-driven spindle (25),
wherein the spindle (25) is connected in an axially displaceable manner to an axis (28) by way of a coupling (29), wherein the axis (28) has the wedge (10) at its end,
wherein the spindle drive (20) has a coupling bar (31) in the area of the coupling (29), wherein the coupling bar (31) is displaceably guided by at least one column (30) extending parallel to the spindle drive (20)
and wherein the column (30) has at least one bottom limit-stop (34a) for the coupling bar (31).

2. The gate valve (1) according to claim 1,
**characterized in that**
the coupling bar (31) comprises two bar shells (33), which form a bearing bush (35) in the area of the column (30).

3. The gate valve (1) according to claim 2,
**characterized in that**
the bearing bush (35) has a slide or ball bearing.

4. The gate valve (1) according to one of the afore-mentioned claims,
**characterized in that**
the axis (28) for receiving the wedge (10) is formed from a corrosion resistant material.

5. The gate valve (1) according to one of the afore-mentioned claims,
**characterized in that**
the coupling (29) comprises a sleeve (32) disposed in the coupling bar (31), which is connected to the spindle (25) and to the axis (28) by a positive-fit or force-fit connection.

6. The gate valve (1) according to claim 5,
**characterized in that**
the axis (28) as well as the spindle (25) have a groove (36, 37) into which protrusions in the sleeve (32) engage.

7. The gate valve (1) according to one of the afore-mentioned claims,
**characterized in that**
the spindle (25) is configured as a roller screw drive.

8. The gate valve (1) according to one of the afore-mentioned claims,
**characterized in that**
the spindle is configured as a planetary roller screw drive.

## Revendications

1. Vanne (1) comportant un carter (2), dans lequel le carter (2) comporte un arbre commandé (20), dans lequel l'arbre commandé (20) comporte à son extrémité un cône de vanne (10) pour fermer un conduit tubulaire (3), dans lequel l'arbre commandé (20) comporte un arbre (25) entraîné mécaniquement,
dans lequel l'arbre (25) est couplé en coulissement axial avec un axe (28) par l'intermédiaire d'un embrayage (29), dans lequel l'axe (28) porte le cône de la vanne (10) à son extrémité,
dans lequel l'arbre commandé (20) comporte dans le secteur de l'embrayage (29) une tige d'embrayage (31), dans lequel la tige d'embrayage (31) est guidée en coulissement par au moins une colonne (30) s'étendant parallèlement à l'arbre commandé (20),
et dans lequel la colonne (30) comporte au moins une butée inférieure (34a) pour la tige d'embrayage (31).

2. Vanne (1) selon la revendication 1,
**caractérisée en ce que**,
la tige d'embrayage (31) comprend deux coques (33) qui forment une boîte de palier (35) dans le secteur de la colonne (30).

3. Vanne (1) selon la revendication 2,
**caractérisée en ce que**,
la boîte de palier (35) comporte un palier de coulissement ou de roulement à billes.

4. Vanne (1) selon l'une des revendications précédentes,
**caractérisée en ce que**,
l'axe (28) est réalisé avec un matériau résistant à la corrosion pour loger le cône de vanne (10).

5. Vanne (1) selon l'une des revendications précédentes, **caractérisée en ce que**,
l'embrayage (29) comporte une manchette (32) logée dans la tige d'embrayage (31), qui est en liaison aussi bien avec l'arbre (25) qu'avec l'axe (28) et agencée pour réaliser un couplage de forme ou de force.

6. Vanne (1) selon la revendication 5,
**caractérisée en ce que**,
l'axe (28) ainsi que l'arbre (25) comportent chacun une gorge (36, 37) dans lesquelles s'engagent des protubérances de la manchette (32).

7. Vanne (1) selon l'une des revendications précédentes,
**caractérisée en ce que**,
l'arbre (25) est configuré en entraînement à vis pour galet.

8. Vanne (1) selon l'une des revendications précédentes,
**caractérisée en ce que**,
l'arbre est configuré en entraînement à rouleaux planétaires.
